# EUROPEAN PATENT SPECIFICATION

(11) **EP 3 119 041 B1**
(45) Date of publication and mention of the grant of the patent: **13.11.2019**
(21) Application number: 15786701.1
(22) Date of filing: 28.04.2015
(51) Int. Cl.: H04L 12/403, H04L 12/437, H04L 12/24, H04L 12/40

(54) **DESIGN ASSISTANCE DEVICE, DESIGN ASSISTANCE METHOD, AND PROGRAM**
KONSTRUKTIONSASSISTENZVORRICHTUNG, KONSTRUKTIONSASSISTENZVERFAHREN UND PROGRAMM
DISPOSITIF D'AIDE À LA CONCEPTION, PROCÉDÉ D'AIDE À LA CONCEPTION ET PROGRAMME

(30) Priority: 28.04.2014 JP 2014092947
(43) Date of publication of application: 18.01.2017
(73) Proprietor: Omron Corporation, Kyoto-shi, Kyoto 600-8530 (JP)
(72) Inventor: IWAI Makoto, Kyoto-shi Kyoto 600-8530 (JP); UEDA Takamasa, Kyoto-shi Kyoto 600-8530 (JP); SAWADA Shigenori, Kyoto-shi Kyoto 600-8530 (JP); MIZUMOTO Hirohito, Kyoto-shi Kyoto 600-8530 (JP); NAKAMURA Toshikatsu, Kyoto-shi Kyoto 600-8530 (JP)
(74) Representative: Horn Kleimann Waitzhofer Patentanwälte PartG mbB
(86) International application number: PCT/JP2015/062856
(87) International publication number: WO 2015/166953

(56) References cited:
- WO-A1-2013/064867
- JP-A- 2006 195 766
- JP-A- 2012 194 637
- US-A1- 2013 173 868
- LEI WANG ET AL: "The Real-Time Networked Data Gathering Systems Based on EtherCAT", JOURNAL OF PHYSICAL CHEMISTRY C, AMERICAN CHEMICAL SOCIETY, US, 4 July 2009 (2009-07-04), pages 513-515, XP031506675, ISSN: 1932-7447

## Description

### TECHNICAL FIELD

The present invention relates to a design assistance device, a design assistance method, and a design assistance program.

### BACKGROUND ART

Nowadays, a technology of controlling various devices such as an FA (Factory Automation) device through a network becomes widespread. There are proposed various network protocols controlling facilities. For example, a protocol called EtherCAT (Ethernet Control Automation Technology) (both EtherCAT and Ethernet are a registered trademark) attracts attention (for example, see Patent Documents JP 5195955 B2 and JP 2013-90335 A). In EtherCAT, a frame transmitted from a high-order master unit passes sequentially through all low-order slave units connected to the network to omit handshake, thereby providing high-speed communication.

Lei Wang et al. disclose in "The Real-Time Networked Data Gathering Systems Based on EtherCAT", 2009 Int. Conf. Environmental Science and Information Application Technology, Wuhan, Volume III, pp. 513-515, an EtherCAT frame subdivided into an EtherCAT header followed by one or more EtherCAT datagrams. Every EtherCAT datagram ends with a 16 Bit Working Counter, which counts the number of devices that were successfully addressed by the EtherCAT datagram. EtherCAT slave controllers increment the Working Counter in hardware, and the master can check the valid processing of EtherCAT datagrams by comparing the Working Counter with an expected value. US 2013/0173868 A1 discloses a slave device comprising a configurable memory storing an activation list, which indicates for consecutive bytes of data of an EtherCAT datagram corresponding fieldbus memory management information or synchronization management information.

### SUMMARY OF THE INVENTION

### PROBLEM TO BE SOLVED BY THE INVENTION

In the protocol of the network in which each slave unit sequentially transfers the frame transmitted from the master unit, whether each slave unit normally transfers the frame is diagnosed. In the case that communication is conducted under the network protocol while all pieces of information about control of the slave units are included in one frame, an abnormal diagnosis is made with respect to the frame transfer of the slave unit because the slave unit is separated from or added to the network, which allows an adverse effect to be exerted on operations of all the slave units connected to the network.

An object of the present invention is to provide a design assistance device for being able to easily generate a frame format, which limits a range of the slave unit exerting the adverse effect when the abnormality occurs during the frame transfer of the slave unit, in the network in which the slave unit sequentially transfers the frame transmitted from the master unit.

### MEANS FOR SOLVING THE PROBLEM

In order to solve the problem a device according to claim 1 is provided. Each slave unit is grouped from device information about each slave unit that sequentially transfers a frame transmitted from a master unit and information about a definition file in which information about a group to which the slave unit belongs is described from network configuration information, and setting information is generated such that the setting information is transmitted in a frame format, in which a data field in each unit in which control data of each slave unit is invalidated due to a transfer abnormality of a data frame is ensured in each group, the data field being included in the data frame in which the control data is stored.

The frame format in which the design assistance device generates the setting information includes not only a frame form transmitted from the master unit but also a provision associated with how to allocate the control data of each slave unit allocated to a form. The design assistance device groups each slave unit, which sequentially transfers a frame transmitted from the master unit, from the device information about each slave unit and the information about the definition file in which the information about the group to which the slave unit belongs is described from the network configuration information. The device information is information about the slave unit. An attribute or an operation content of the slave unit can be cited as an example of the device information. The design assistance device generates the setting information such that the setting information is transmitted in the frame format having the data field in which the control data of each slave unit is stored. The data field is ensured in each unit in which the control data is invalidated due to the transfer abnormality of the data frame, and ensured in each group of one frame.

Thus, the design assistance device automatically groups each slave unit. Therefore, even if a user has no advanced knowledge of the protocol setting the frame format to hardly recognize the detailed configuration of the network or the information about each slave unit, such as how the devices constitute the network topology or which one of connection forms is used, the frame format limiting the range of the slave unit influenced by the abnormal frame transfer of the slave unit can easily be generated.

The group determinator may group each slave unit into an operation content from information about the operation content of each slave unit, the information about the operation content of each slave unit being obtained from the device information, and the setting part may generate the setting information such that the setting information is transmitted in the frame format, in which the data field is ensured in each group grouped in each operation content. When the grouping is performed in each operation content of the slave unit, the pieces of control data of the slave units having a low operation content relationship are grouped into different data fields, so that the range of the slave unit influenced by the data invalidation can be limited in each operation content.

The group determinator may group each slave unit from information about an attribute whether automatic stopping is performed when the information about the operation content of each slave unit senses an abnormality, the information about the operation content of each slave unit being obtained from the device information, and the setting part may generate the setting information such that the setting information is transmitted in the frame format, in which the data field is ensured in each group, the group being grouped into a safety device that stops automatically when sensing the abnormality and a non-safety device that does not stop automatically even if sensing the abnormality. When the grouping is performed from the viewpoint of whether the safety device automatically stops, the control data associated with the safety of the slave unit the control data not associated with the safety of the slave unit are grouped into different data fields, so that the range of the slave unit influenced by the data invalidation can be limited to the range associated with the safety and the range not associated with the safety.

### EFFECT OF THE INVENTION

Accordingly, in the design assistance device of the present invention, the frame format that limits the range of the slave unit exerting the adverse effect when the abnormality occurs during the frame transfer of the slave unit can easily be generated in the network in which the slave unit sequentially transfers the frame transmitted from the master unit.

### BRIEF DESCRIPTION OF THE DRAWINGS

Fig. 1 is a diagram illustrating an example of an entire configuration of a PLC (Programmable Logic Controller) system.
Fig. 2 is a schematic diagram illustrating a hardware configuration of a design assistance device according to an embodiment of the present invention.
Fig. 3 is a diagram illustrating an example of a hardware configuration of a CPU unit.
Fig. 4 is a diagram illustrating an example of a functional block implemented in the CPU unit.
Fig. 5 is a flow chart illustrating an example of a processing flow performed in the CPU unit.
Fig. 6 is a diagram illustrating an example of a design assistance display screen output from an operation part.
Fig. 7 is a diagram illustrating an example of a table indicating an addition condition when units are grouped.
Fig. 8 shows an example of a table in which the groups are sorted in each unit attribute.
Fig. 9 is a diagram illustrating a second example of the design assistance display screen output from the operation part.
Fig. 10 is a diagram illustrating an example of a frame generated by a frame generator.
Fig. 11 is a diagram illustrating an example of a breakdown of slave unit allocation.
Fig. 12 is a diagram illustrating an example of a state in which WKC in the frame changes in a process of going around each node constituting a network.
Fig. 13A is a diagram illustrating a content of a definition file according to a first example.
Fig. 13B is a diagram illustrating a content of a definition file according to a second example.
Fig. 13C is a diagram illustrating a content of a definition file according to a third example.
Fig. 13D is a diagram illustrating a content of a definition file according to a fourth example.

### MODE FOR CARRYING OUT THE INVENTION

Hereinafter, an embodiment of the present invention will be described. The following embodiment is one aspect of the present invention, and is not limited to the technical scope of the present invention.

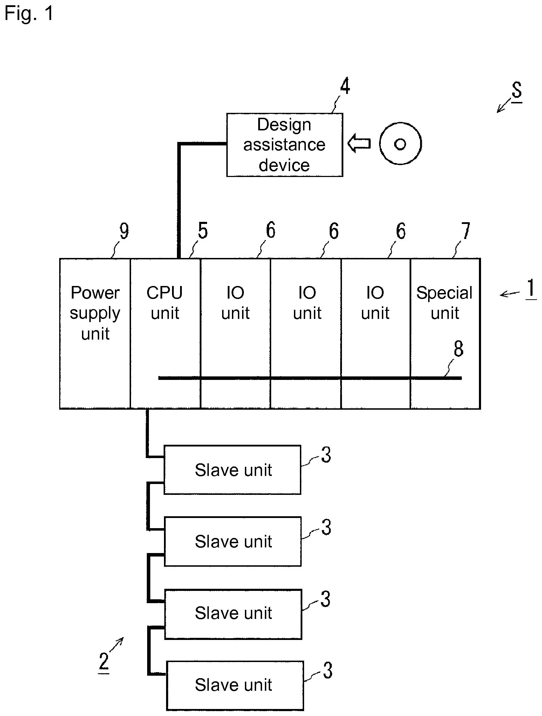

Fig. 1 is a diagram illustrating an example of an entire configuration of a PLC system. A PLC system S includes a PLC 1 and a slave unit 3 connected to the PLC 1 through a network 2. A design assistance device 4 is connected to the PLC 1.

PLC 1 includes a CPU (Central Processing Unit) unit 5 that performs various pieces of calculation processing, an IO (Input and Output) unit 6, and a special unit 7. The CPU unit 5, the IO unit 6, the special unit 7 are configured to be able to exchange pieces of data with one another through a PLC system bus 8. A power supply unit 9 supplies electric power having a proper voltage to the CPU unit 5, the IO unit 6, and the special unit 7.

The IO unit 6 controls various pieces of input and output processing. The IO unit 6 acquires a signal output from sensors such as a detection switch, and outputs a signal to various devices such as a relay and an actuator. The special unit 7 controls implementation of various functions, such as input and output of analog data, temperature control and communication conducted by a specific communication scheme, which are not supported by the IO unit 6.

The network 2 is a communication line through which various pieces of data exchanged between the CPU unit 5 and each slave unit 3 are transmitted. In the network 2, each slave unit 3 sequentially transfers a frame transmitted from the CPU unit 5. EtherCAT can be cited as an example of a protocol pursuant to a communication scheme in which each slave unit 3 sequentially transfers a frame transmitted from the CPU unit 5.

In Fig. 1, by way of example, the PLC system S includes both the PLC system bus 8 and the network 2. Alternatively, for example, the IO unit 6 and the special unit 7 may be connected to the CPU unit 5 through the network 2.

In the PLC system S, the CPU unit 5 of the PLC 1 acts as a master unit in EtherCAT. The PLC 1 corresponds to an example of the "master unit" of the present invention. However, in the embodiment, another unit except for the CPU unit 5 may act as the master unit in EtherCAT.

For example, the PLC system S can be used in a factory that produces various industrial products, a chemical plant in which raw materials are subjected to various chemical processes, and various machine facilities.

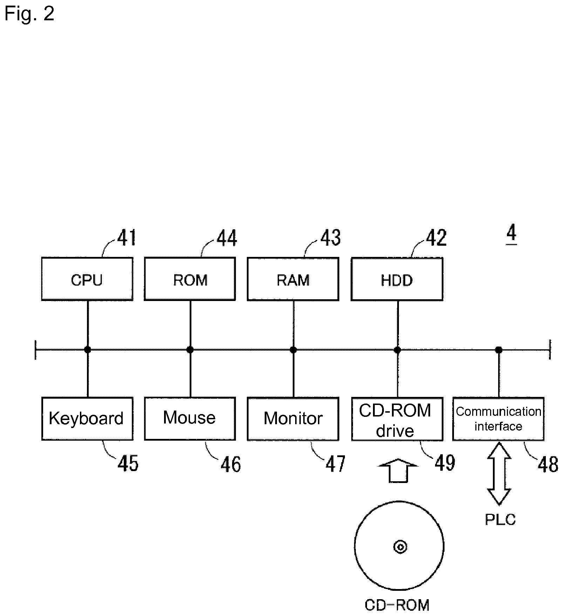

Fig. 2 is a schematic diagram illustrating a hardware configuration of the design assistance device 4 according to an embodiment of the present invention. Referring to Fig. 2, the design assistance device 4 is typically constructed with a general-purpose computer.

Referring to Fig. 2, the design assistance device 4 includes a CPU 41 that executes various programs including an OS (Operating System), a ROM (Read Only Memory) 44 in which a BIOS (Basic Input Output System) and various pieces of data are stored, a memory RAM 43 that provides a work area where data necessary for the program executed with the CPU 41 is stored, and an HDD (Hard disk Drive) 42 in which the program executed with the CPU 41 is stored in a nonvolatile manner.

The design assistance device 4 also includes a keyboard 45 and a mouse 46 that receive operation from a user and a monitor 47 that presents information to the user. The design assistance device 4 also includes a communication interface (IF) 48 that conducts communication with the PLC 1 and the like and a CD-ROM drive 49 that accesses a CD-ROM.

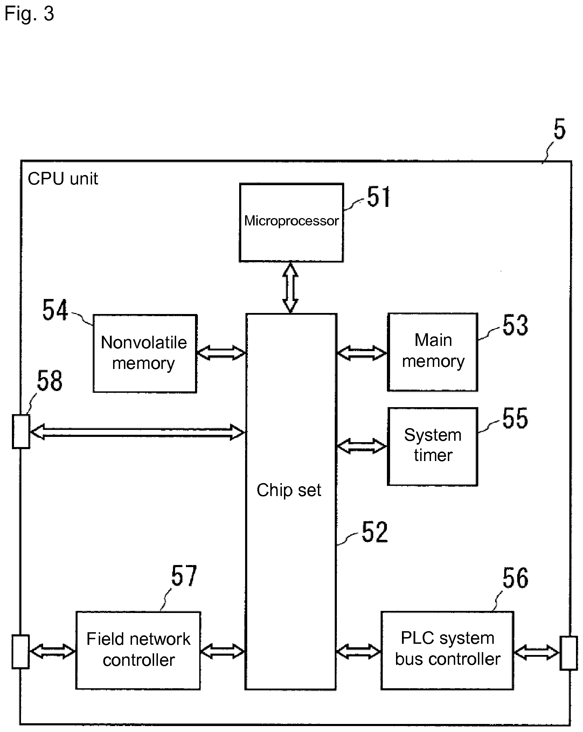

Fig. 3 is a diagram illustrating an example of the hardware configuration of the CPU unit 5. The CPU unit 5 includes a microprocessor 51, a chip set 52, a main memory 53, a nonvolatile memory 54, a system timer 55, a PLC system bus controller 56, a field network controller 57, and a USB connector 58. The chip set 52 and other components are connected to each other through various buses.

In the CPU unit 5, the microprocessor 51 processes various programs such as a real-time OS, a system program of the PLC 1, a user program, and a motion calculation program and pieces of processing for various pieces of data such as system setting parameter using an interrupt signal generated with the system timer 55, thereby performing control operation in each motion control cycle.

The PLC system bus controller 56 controls data exchange through the PLC system bus 8. The PLC system bus controller 56 temporarily stores data, which is exchanged with the IO unit 6 or the special unit 7 through the PLC system bus 8, or transfers the stored data.

The field network controller 57 controls data exchange through the network 2. The field network controller 57 temporarily stores data, which is exchanged with each slave unit 3 through the network 2, according to the protocol of EtherCAT or transfers the stored data.

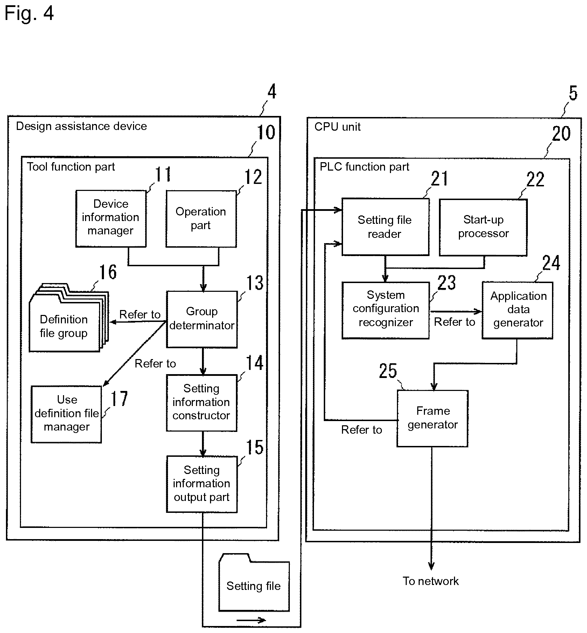

Fig. 4 is a diagram illustrating an example of a functional block implemented in each of the design assistance device 4 and the CPU unit 5. The design assistance device 4 is powered on, and the CPU 41 executes the program loaded on the RAM 43 of the CPU unit 4, thereby implementing the tool function part 10. The PLC 1 is powered on, and the microprocessor 51 executes the program loaded on the main memory 53 of the CPU unit 5, thereby implementing the PLC function part 20.

The tool function part 10 provides tools assisting production of a network topology for a user. The tool function part 10 includes various function parts such as a device information manager 11, an operation part 12, a group determinator 13, a setting information constructor 14, a setting information output part 15, and a use definition file manager 17, and a definition file group 16.

The device information manager 11 acquires and manages device information such as a type of each slave unit 3. The device information manager 11 may manage the device information by reading the device information from an external file or a file managed by the device information manager 11 per se. The device information manager 11 corresponds to an example of the "device information acquisition part".

The operation part 12 outputs a screen of the network topology displayed on a display device of the design assistance device 4, and receives user input operation in an input device of the design assistance device 4. For example, a connection state between the slave units 3 is shown on the screen of the network topology generated with the operation part 12.

The group determinator 13 groups the slave units 3 based on device information about each slave unit 3 and definition file information.

The setting information constructor 14 generates configuration data based on a grouping result performed with the group determinator 13. The configuration data is data defining the frame format. For example, a data field size ensured in each group, an expected value of a working counter, and an address of the slave unit 3 belonging to each group are provided for in the configuration data. The setting information constructor 14 corresponds to an example of the "setting part" of the present invention.

The setting information output part 15 compiles network setting data generated with the setting information constructor 14 and a program produced by a user, and transmits the network setting data and the program to the CPU unit 5 through the communication interface 48.

The definition file group 16 is one or plural files in which a logic is described when the group determinator 13 groups the slave units 3 from the device information. In the definition file group 16, for example, information about the group to which each slave unit 3 should belong is described from device information about each slave unit 3 connected to the network 2 or configuration information about the network 2. The definition file group 16 is stored in the storage such as the HDD 42 and the ROM 44.

The use definition file manager 17 manages the definition file used according to the input received through the operation part 12.

The tool function part 10 is not limited to one that is implemented in the design assistance device 4, but may be implemented in the CPU unit 5, for example.

The design assistance device 4 may include not only the tool function part 10 but also a program edit function of receiving user input to produce or edit a control program or a unit setting function of setting an operation mode in the case that the unit has plural operation modes.

The PLC function part 20 will now be described below. The PLC function part 20 controls a function of generating the frame transmitted to each slave unit 3 through the network 2 according to a network setting that is produced by the user using tools provided from the tool function part 10. The PLC function part 20 includes various function parts such as a setting file reader 21, a start-up processor 22, a system configuration recognizer 23, an application data generator 24, and a frame generator 25.

The setting file reader 21 reads a content of a setting file generated with the tool function part 10, and expands the setting file into the main memory 53. In response to a read request from the frame generator 25, the setting file reader 21 outputs data associated with the content of the setting file expanded into the main memory 53.

When the PLC 1 is started up, the start-up processor 22 causes the setting file reader 21 to read information about the system configuration from the setting file, and to output the information to the system configuration recognizer 23.

The system configuration recognizer 23 manages a current situation of the system configuration based on the system configuration information output from the setting file reader 21 in starting up the PLC 1 or information acquired from each slave unit 3 through the network 2.

The application data generator 24 captures the data output from a storage area of the main memory 53 to each slave unit 3, and outputs the data of the slave unit 3, which is a data exchange target in the current system configuration, to the frame generator 25.

The frame generator 25 makes a read request to the setting file reader 21 in each motion control cycle, and refers to the data associated with the content of the setting file output from the setting file reader 21. Then, the frame generator 25 generates the frame to which the output data output from the application data generator 24 is added according to the format having the content provided for in the setting file.

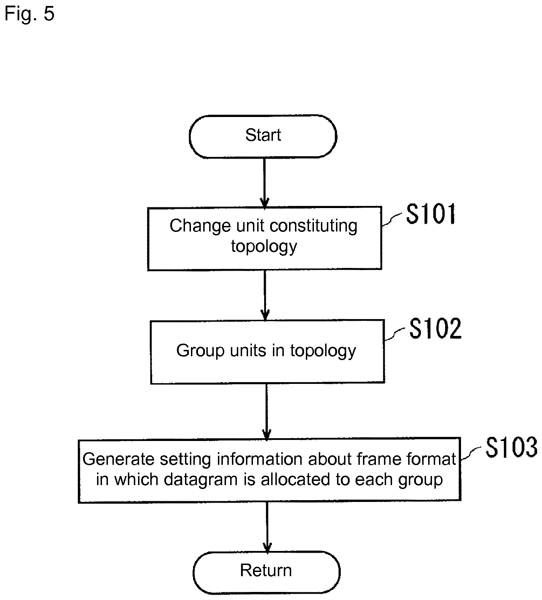

Fig. 5 is a flow chart illustrating an example of a processing flow performed in the design assistance device 4. Each piece of processing performed with the design assistance device 4 will be described below with reference to a flowchart in Fig. 5. The design assistance device 4 is powered on, and the CPU 41 executes the program to implement the tool function part 10. Therefore, the tool function part 10 of the design assistance device 4 receives inputs of addition of a new unit and addition of the network configuration as a network topology change from the user through the operation part 12, and checks whether the unit constituting the network topology is changed (S101). The tool function part 10 receives the input of the network configuration assigned from the operation part 12, and reads the device information from the device information manager 11. Using the read device information, the group determinator 13 groups the units constituting the network topology (S102). The setting information constructor 14 generates the setting information in order to divide datagrams with respect to the group determined with the group determinator 13 (S103).

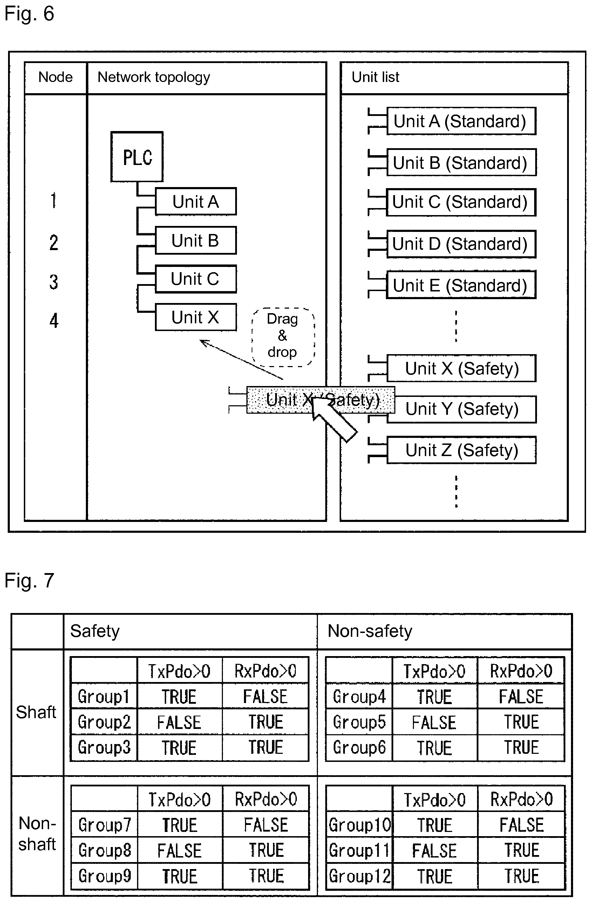

Fig. 6 is a diagram illustrating an example of a design assistance display screen output from the operation part 12. The operation part 12 displays a design assistance GUI (Graphical User Interface). In the design assistance GUI, a network topology screen expressing the network topology of the PLC system S is displayed on the left side, and a unit list screen in which the units capable of being added to the network topology are arrayed is displayed on the right side. The design assistance display screen is generated based on the device information managed with the device information manager 11.

Each unit is displayed on the unit list screen as an icon to which a unit name and display (corresponds to the description of "standard" and "safety" in Fig. 6) associated with a unit attribute are added. A connection line is provided to each icon. The connection line corresponds to the number of ports of connection interfaces provided in the unit. The port is roughly divided into an in-port and an out-port. The in-port is used to connect a high-order device positioned in higher order than the own device in the network topology, and corresponds to the port of the connection line upward from a left side of each icon. Examples of the high-order device include the PLC 1 and the slave unit 3 connected between the own device and the PLC 1. The out-port is used to connect a low-order device positioned in lower order than the own device in the network topology, and corresponds to the port of the connection line downward from the left side of each icon. Examples of the low-order device include the slave unit 3 connected to the port opposite to the PLC 1 with respect to the own device in the network topology.

The PLC 1 or each slave unit 3 constituting the network of the PLC system S is displayed on the network topology screen such that one component is allocated to one line. In the network topology screen, the higher-order device is displayed in an upper line, and the lower-order device is displayed on a lower line. The PLC 1 including the design assistance device 4, which constitutes the PLC system S to act as the master unit in EtherCAT, is displayed in the topmost line. The slave units 3 that correspond to the low-order devices from the viewpoint of the PLC 1 are displayed below the PLC 1 in the descending order. In the network topology screen, a connection relationship among the slave units 3 is displayed in a visually comprehensive manner by a difference of the line in which the slave unit 3 is disposed, so that the user can design the network while easily recognizing the connection order of the slave unit 3.

The operation part 12 displays the design assistance screen to receive the operation performed by the user with a pointing device such as the mouse 46. The user performs drag and drop operation on the unit icon to add the unit icon displayed in the unit list to the network topology, or to separate the unit icon from the network topology. Fig. 6 illustrates a state in which the unit icon existing in the unit list is added to the network topology.

The unit constituting the network topology is changed in the case that the user performs the unit addition operation or the unit separation operation in the design assistance GUI. In the case that the user performs the unit addition operation or the unit separation operation, in the design assistance device 4, the group determinator 13 performs the processing of grouping the units in the network topology (S102).

Fig. 7 illustrates an example of a table of a group addition condition in grouping each unit, and an example of a description content of the definition file included in the definition file group 16. "TxPdo" (Transmission Process Data Object) in Fig. 7 is a size of process data transmitted from the slave unit to the master unit. For example, TxPdo becomes a value larger than zero for the slave unit that transmits pieces of data such as a control state and a current value of the slave unit to the master unit. "RxPdo" (Receive Process Data Object) in Fig. 7 is a size of process data that the slave unit receives from the master unit. For example, RxPdo becomes a value larger than zero for the slave unit that receives pieces of data such as a control command and a control target value from the master unit. "Safety" in Fig. 7 is an example of a slave unit attribute that is provided for in each slave unit as part of the device information, and an attribute to which the unit having a safety function of stopping automatically during the occurrence of the abnormality belongs. "Non-safety" in Fig. 7 is an attribute to which the unit having no safety function belongs. A watchdog, which performs exception operation when data refresh is not performed for a given time by the frame going around the network 2, is provided in the unit in which the operation content of the device may have an influence on the safety of the whole facility. "Shaft" in Fig. 7 is an example of the slave unit attribute that is provided for in each slave unit as part of the device information, and an attribute to which the unit performing continuous operation belongs. Unlike "shaft", "non-shaft" in Fig. 7 is an attribute to which the unit performing discontinuous operation belongs. In the case that the use definition file manager 17 assigns the use of the definition file whose description content is expressed in the table of Fig. 7, the group determinator 13 groups the units according to the unit attribute and the presence or absence of TxPdo or RxPdo.

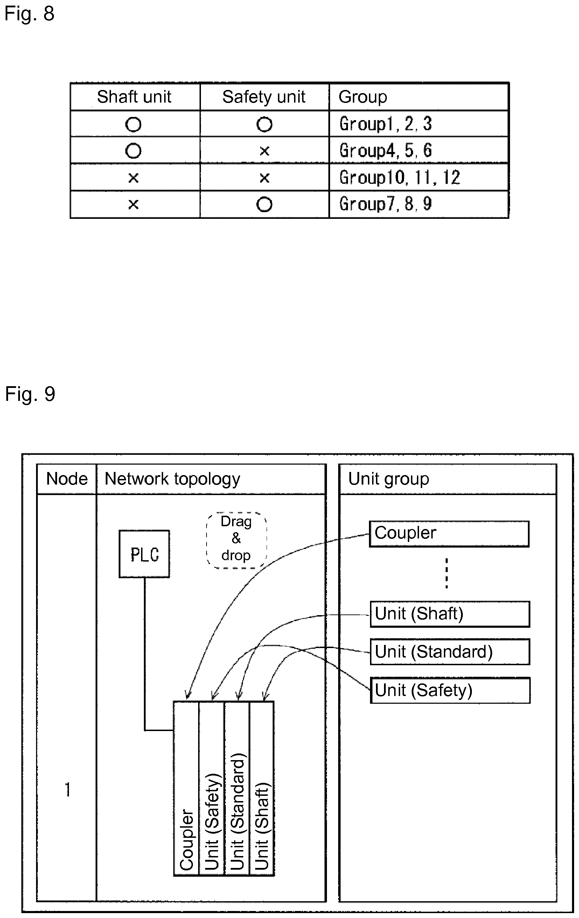

Fig. 8 shows an example of a table in which the groups are sorted in each unit attribute. For example, the groups are divided into four kinds as illustrated in Fig. 8 when the group determinator 13 arranges the groups to which the units belong in each unit attribute according to the description content of the definition file assigned with the use definition file manager 17.

Fig. 9 is a diagram illustrating a second example of the design assistance display screen output from the operation part 12. For example, one or plural slave units 3 can be combined with a coupler on the design assistance GUI. The coupler is connected to the PLC and one or plural units. The coupler has a function of receiving the data from the PLC and transmitting the received data to the unit and a function of receiving the data from the unit and transmitting the received data to the PLC. Examples of the units that can be combined with the coupler includes a standard unit belonging to "non-safety", a unit belonging to "safety", and a unit (such as a servo and a motor) belonging to "shaft". Thus, even if the attribute of the unit constituting the slave unit 3 is highly diversified, the units can belong to one of groups 1 to 3, groups 4 to 6, groups 7 to 9, and groups 10 to 12 according to the table in Fig. 8. In the example of Fig. 9, the coupler represents the combinable unit. In the example of Fig. 9, the group to which the coupler belongs can be determined in the case that plural unit attributes such as "safety"/"non-safety" and "shaft"/"non-shaft" exist.

For example, in the case that the coupler is added to the network topology, because neither the unit belonging to "shaft" nor the unit belonging to "safety" is combined with the coupler, the coupler is classified as the groups 10 to 12 according to the table in Fig. 8. At this point, for example, in the case that the unit belonging to "safety" ("unit (safety)" in Fig. 9) is added, the coupler is classified as the groups 7 to 9 according to the table in Fig. 8. In the case that the unit belonging to "non-safety" ("unit (standard)" in Fig. 9) is further added, the coupler is not changed while remaining classified as the groups 7 to 9 according to the table in Fig. 8. In the case that the unit belonging to "shaft" ("unit (shaft)" in Fig. 9) is further added, the coupler is classified as the groups 1 to 3 according to the table in Fig. 8. Thus, the attribute of the slave unit 3 is decided according to the unit combined with the coupler.

After the units in the network topology are grouped according to the group addition condition as described above, the setting information constructor 14 performs processing of generating frame format setting information (S103).

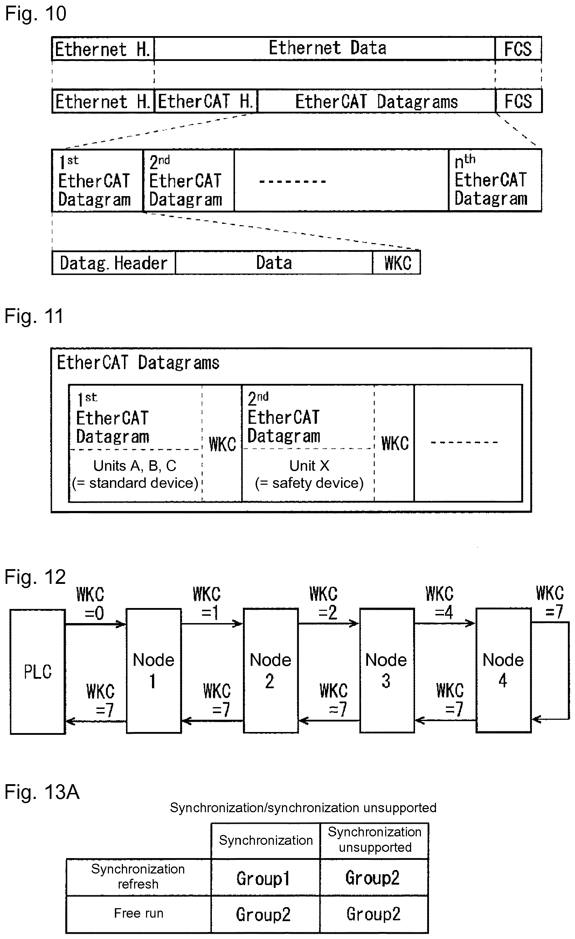

Fig. 10 is a diagram illustrating an example of the frame generated with the frame generator 25. Because EtherCAT is the protocol based on Ethernet, a preamble or a destination address that causes each device on the network 2 to recognize start of the frame transmission, a header field (corresponds to "Ethernet H." in Fig. 10) in which a source address is stored, a data field (corresponds to "Ethernet Data" in Fig. 10) in which control information about each slave unit 3 is stored, and an FCS (Frame Check Sequence) field (corresponds to "FCS" in Fig. 10) detecting an error of the frame are prepared in the frame generated with the frame generator 25. A header field (corresponds to "EtherCAT H." in Fig. 10) of EtherCAT and a data field (corresponds to "EtherCAT Datagrams" in Fig. 10) of EtherCAT are prepared in the field of "Ethernet Data". In the field of "EtherCAT Datagrams", n data fields (corresponds to 1st to nth "EtherCAT Datagram" in Fig. 10) can be prepared. A header field (corresponds to "Datag.Header" in Fig. 10), a data field (corresponds to "Data" in Fig. 10) in which the control information about each slave unit 3 is stored, and a WKC (Working Counter) field (corresponds to "WKC" in Fig. 10) detecting an error of "EtherCAT Datagram" are prepared in each field of "EtherCAT Datagram".

In EtherCAT, WKC that is a field checking whether the data in "EtherCAT Datagrams" is correctly exchanged with the data of the target slave unit is prepared in each "EtherCAT Datagram". Therefore, there is "EtherCAT Datagram" in which WKC indicates abnormal exchange with the data of the target slave unit. Even if the data is invalidly dealt, the control can normally be performed based on another piece of data of "EtherCAT Datagram" in which WKC does not indicate the abnormal exchange with the data of the target slave unit.

For this reason, according to the grouping result of the group determinator 13, the setting information constructor 14 generates setting information about the frame format in which the data of the slave unit 3 allocated to each data field of "EtherCAT Datagram" is provided for. In the case that the data error in a specific data field of "EtherCAT Datagram" is found out by the check of WKC to invalidate the data of the field, the data is allocated from the viewpoint of limiting a range of the slave unit influenced by the invalidation of the data of the field.

Fig. 11 is a diagram illustrating an example of an allocation breakdown of the slave unit 3. In the example of Fig. 11, the data associated with the slave unit 3 (standard device) in which only the standard unit belonging to "non-safety" is combined with the coupler is allocated to the field of "1st EtherCAT Datagram". The slave unit 3 in which only the standard unit belonging to "non-safety" is combined with the coupler corresponds to an example of the "non-safety device" of the present invention. The data associated with the slave unit 3 including the unit belonging to "safety" is allocated to the data field of "2nd EtherCAT Datagram". The slave unit 3 including the unit belonging to "safety" has the safety function of stopping automatically in sensing the abnormality, and corresponds to an example of the "safety device" of the present invention. The content of the setting information generated with the setting information constructor 14 is included in the setting file generated with the setting information output part 15, and handed over to the PLC function part 20. Although "safety" and "non-safety" are illustrated in the embodiment, the same holds true for the case of "shaft" and "non-shaft".

Thus, the design assistance device 4 automatically groups the slave units 3. Therefore, even if the user has no advanced knowledge of the protocol setting the frame format, and hardly recognizes the detailed configuration of the network 2 or the information about each slave unit 3, the frame format limiting the range of the slave unit 3 influenced by the abnormal frame transfer of the slave unit 3 can easily be generated.

In the PLC function part 20 of the CPU unit 5, the frame is generated according to the format that is provided for in the setting file handed over from the tool function part 10 of the design assistance device 4, and the frame is used in the communication of the network 2. That is, in the PLC function part 20, the setting file reader 21 reads the content of the setting file, and the frame generator 25 generates the frame in which the data output from the application data generator 24 is stored in the data field according to the provision of the setting file. The frame generated with the PLC function part 20 goes around in the network 2, and the control information about each slave unit 3 is periodically refreshed.

Fig. 12 is a diagram illustrating an example of a state in which WKC in the frame changes in a process of going around each node (corresponding to the slave unit 3) constituting the network 2. For example, it is assumed that a proper value is added to WKC of "EtherCAT Datagram" of the frame transmitted from the PLC 1 every time the frame passes through each node. An expected value of WKC of "EtherCAT Datagram" of the frame turned from the node located at the lowest order in the network 2 is previously set to the PLC 1. In the network 2 of EtherCAT, in the case that specific WKC of "EtherCAT Datagram" in the frame turned from the node located at the lowest order to the PLC 1 is not matched with a default expected value, the data in the field of "EtherCAT Datagram" is abnormally dealt, and invalidated. Therefore, in the case that the control command or the control target value is included in the invalidated data, sometimes the slave unit 3 connected to the network 2 may be abnormally operated. However, in the frame generated with the PLC function part 20, the tool function part 10 automatically allocates the pieces of data of the slave units 3 to the different data fields of "EtherCAT Datagram" in each group such that the range of the slave unit influenced by the data invalidation is limited even if the data in a specific data field of "EtherCAT Datagram" is invalidated due to an error. Accordingly, even if the user does not recognize the detailed configuration of the network 2 and the detailed information about each slave unit 3, the user can limit the range of the slave unit 3 influenced by the data invalidation.

In the embodiment, the case applied to EtherCAT is described by way of example. However, the embodiment is not limited to the application to EtherCAT. The embodiment can also be applied to other protocols except for EtherCAT as long as each slave unit sequentially transfers the frame transmitted from the master unit in the network.

Variations of the definition file that can be referred to with the group determinator 13 will be described below.

Fig. 13A is a diagram illustrating a content of the definition file according to a first example. For example, the definition file group 16 of the embodiment may include the following definition file of the first example. In the definition file of the first example, a logic grouping each unit is provided for from the viewpoint of whether the unit has a synchronization function. For example, as illustrated in Fig. 13A, in the provision of the definition file, a synchronous unit belongs to a group 1, and an asynchronous unit belongs to a group 2. The units include a unit having the synchronization function set to be valid (synchronization refresh mode), a unit having the synchronization function set to be invalid (free-run mode), and a unit having no synchronization function. For example, the valid and invalid setting (mode setting) of the synchronization function is performed during the setting of the network topology or programming.

Thus, in the provision of the definition file of the first example, the unit having the synchronization function set to be valid belongs to the group 1, and other units belong to the group 2. Therefore, in the case that the group determinator 13 performs the grouping by referring to the definition file of the first example, in step S103, the field of "EtherCAT Datagram" in which the data of the synchronous unit (group 1) is stored and the field of "EtherCAT Datagram" in which the data of the asynchronous unit (group 2) is stored are separately prepared in the frame format in which the setting information is generated with the setting information constructor 14.

When the communication is conducted in pursuant to the frame format in the network 2, the range of the unit influenced by the occurrence of the error in the specific data field can be limited within the range of the synchronous unit or the range of the asynchronous unit.

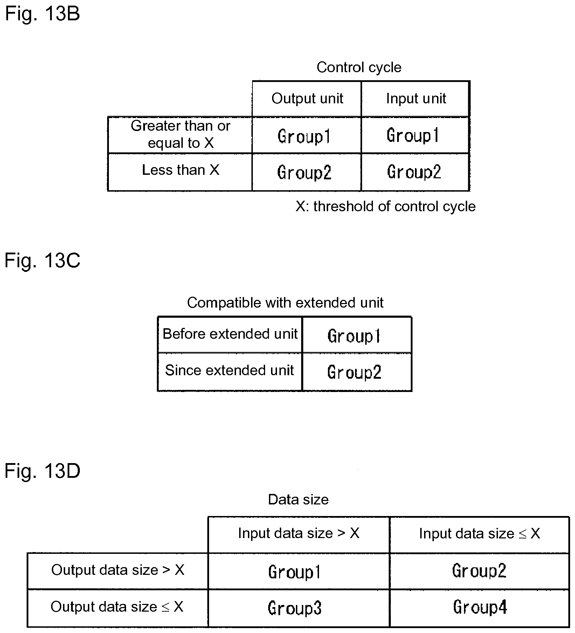

Fig. 13B is a diagram illustrating a content of the definition file according to a second example. For example, the definition file group 16 of the embodiment may include the following definition file of the second example. In the definition file of the second example, the logic grouping each unit is provided for from the viewpoint of whether a control cycle (data exchange cycle) of each unit is short. For example, as illustrated in Fig. 13B, an output unit or an input unit whose control cycle is greater than or equal to X belongs to the group 1, and the output unit or input unit whose control cycle is less than X belongs to the group 2. In the definition file of the second example, X is a threshold of the control cycle. X may properly be changed according to the control cycle of each slave unit 3 connected to the network 2, or set to a default fixed value.

Thus, in the provision of the definition file of the second example, the unit having the long control cycle belongs to the group 1, and other units belong to the group 2. Therefore, in the case that the group determinator 13 performs the grouping by referring to the definition file of the second example, in step S103, the field of "EtherCAT Datagram" in which the data of the unit having the long control cycle (group 1) is stored and the field of "EtherCAT Datagram" in which the data of the unit having the short control cycle (group 2) is stored are separately prepared in the frame format in which the setting information is generated with the setting information constructor 14. In the logic content of the definition file of the second example, each unit may be grouped into at least three according to the control cycle.

When the communication is conducted in pursuant to the frame format in the network 2, the range of the unit influenced by the occurrence of the error in the specific data field can be limited within the range of the unit having the short control cycle or the range of the unit having the long control cycle.

Fig. 13C is a diagram illustrating a content of the definition file according to a third example. For example, the definition file group 16 of the embodiment may include the following definition file of the third example. In the definition file of the third example, the logic grouping each unit is provided for from the viewpoint of whether each unit is located before an extended unit on a pathway of the network 2. For example, as illustrated in Fig. 13C, the unit located before the extended unit belongs to the group 1, and the unit located since the extended unit belongs to the group 2. As used herein, the extended unit means a network device that is connected to the slave unit 3 connected to the network 2, and means a device that connects another unit to the lower order of the slave unit 3 on the pathway of the network 2 to enable the extension of the unit.

Thus, in the provision of the definition file of the third example, the unit located before the extended unit on the pathway of the network 2 belongs to the group 1, and other units belong to the group 2. Therefore, in the case that the group determinator 13 performs the grouping by referring to the definition file of the third example, in step S103, the field of "EtherCAT Datagram" in which the data of the unit located before the extended unit (group 1) is stored and the field of "EtherCAT Datagram" in which the data of the unit located since the extended unit (group 2) is stored are separately prepared in the frame format in which the setting information is generated with the setting information constructor 14.

When the communication is conducted in pursuant to the frame format in the network 2, the range of the unit influenced by the occurrence of the error in the specific data field can be limited within the range of the unit located before the extended unit or the range of the unit located since the extended unit.

Fig. 13D is a diagram illustrating a content of the definition file according to a fourth example. For example, the definition file group 16 of the embodiment may include the following definition file of the fourth example. In the definition file of the fourth example, the logic grouping each unit is provided for from the viewpoint of performing the grouping in a data size of each of input data and output data of the unit. For example, as illustrated in Fig. 13D, the unit in which both the input data size and the output data size are larger than X belongs to the group 1, the unit in which the input data size is less than or equal to X while the output data size is larger than X belongs to the group 2, the unit in which the input data size is larger than X while the output data size is less than or equal to X belongs to the group 3, and the unit in which both the input data size and the output data size are less than or equal to X belongs to the group 4. In the definition file of the fourth example, X is a threshold of the data size. X may properly be changed according to the sizes of the input data and output data of each slave unit 3 connected to the network 2, or set to a default fixed value.

Thus, in the provision of the definition file of the fourth example, the grouping is performed according to the data sizes of the input data and output data. Therefore, in the case that the group determinator 13 performs the grouping by referring to the definition file of the fourth example, in step S103, different fields of "EtherCAT Datagram" are separately prepared according to the data sizes of the input data and output data in the frame format in which the setting information is generated with the setting information constructor 14. In the logic content of the definition file of the fourth example, each unit may be grouped into at least two according to the data size of the input data, or grouped into at least two according to the data size of the output data. In the logic content of the definition file of the fourth example, each unit may be grouped according to the data sizes of at least three levels.

When the communication is conducted in pursuant to the frame format in the network 2, the range of the unit influenced by the occurrence of the error in the specific data field can be limited within the range of the units whose data sizes of the input data and output data are relatively similar to each other.

### «Computer-readable recording medium»

A program causing a computer, another machine, or a device (hereinafter, referred to as a computer and the like) to implement one of the functions can be recorded in a computer-readable recording medium. The computer and the like are caused to read the program from the recording medium, and to execute the program, which allows the function to be provided.

As used herein, the recording medium that can be read with the computer and the like means a recording medium in which information such as the data and the program is non-transiently stored by electric, magnetic, optical, mechanical, or chemical action and capable of being read with the computer and the like. In the recording mediums, examples of the recording mediums detachable from the computer and the like include a flexible disk, magneto-optical disk, a CD-ROM, a CD-R/W, a DVD, a Blu-ray (registered trademark) disk, a DAT, an 8-mm tape, and a memory card such as a flash memory. The hard disk drive and the ROM are the recording medium fixed to the computer and the like.

### DESCRIPTION OF SYMBOLS

- S: PLC system
- 1: PLC
- 2: network
- 3: slave unit
- 4: design assistance device
- 5: CPU unit
- 6: IO unit
- 7: special unit
- 8: PLC system bus
- 9: power supply unit
- 41, 51: microprocessor
- 42: HDD
- 43: RAM
- 44: ROM
- 45: keyboard
- 46: mouse
- 47: monitor
- 48: communication interface
- 49: CD-ROM drive
- 52: chip set
- 53: main memory
- 54: nonvolatile memory
- 55: system timer
- 56: PLC system bus controller
- 57: field network controller
- 58: USB connector
- 10: tool function part
- 11: device information manager
- 12: operation part
- 13: group determinator
- 14: setting information constructor
- 15: setting information output part
- 16: definition file group
- 17: use definition file manager
- 20: PLC function part
- 21: setting file reader
- 22: start-up processor
- 23: system configuration recognizer
- 24: application data generator
- 25: frame generator

## Claims

1. A design assistance device (4) that sets communication between a master unit (1) and slave units (3) through a network (2), the design assistance device (4) comprising:
a device information acquisition part (11) configured to acquire device information about each slave unit (3) connected to the master unit (1);
a storage (42, 44) in which a definition file (16) is stored, listing information about a group to which a slave unit (3) belongs from the device information or network configuration information;
**characterized by**:
a group determinator (13) configured to group each slave unit (3) based on the information in the definition file (16) and the device information about each slave unit (3); and
a setting part (14) configured to generate configuration data based on a grouping result performed with the group determinator (13), the configuration data being data defining an Ethernet frame format of Ethernet frames transmitted sequentially from the master unit (1) to the slave unit (3);
each Ethernet frame comprising a plurality of EtherCAT datagrams, each EtherCAT datagram comprising a header, data and a working counter WKC, the working counter indicating abnormal exchange of data with target slave units (3);
wherein the configuration data defines groups of target slave units (3) associated with each EtherCAT datagram.

## Patentansprüche

1. Konstruktionsassistenzvorrichtung (4), die die Kommunikation zwischen einer Master-Einheit (1) und Slave-Einheiten (3) über ein Netzwerk (2) einstellt, wobei die Konstruktionsassistenzvorrichtung (4) umfasst:
einen Geräteinformations-Erfassungsteil (11), der eingerichtet ist, Geräteinformationen über jede mit der Master-Einheit (1) verbundene Slave-Einheit (3) zu erfassen;
einen Speicher (42, 44), in dem eine Definitionsdatei (16) gespeichert ist, die Informationen über eine Gruppe, zu der eine Slave-Einheit (3) gehört, aus den Geräteinformationen oder Netzwerkkonfigurationsinformationen auflistet;
**gekennzeichnet durch**:
einen Gruppendeterminator (13), der eingerichtet ist, jede Slave-Einheit (3) basierend auf den Informationen in der Definitionsdatei (16) und den Geräteinformationen über jede Slave-Einheit (3) zu gruppieren; und
einen Einstellteil (14), der eingerichtet ist, Konfigurationsdaten basierend auf einem Gruppierungsergebnis zu erzeugen, das mit dem Gruppendeterminator (13) durchgeführt wurde, wobei die Konfigurationsdaten Daten sind, die ein Ethernet-Frame-Format von Ethernet-Frames definieren, die sequenziell von der Master-Einheit (1) an die Slave-Einheit (3) übertragen wurden;
wobei jeder Ethernet-Frame eine Mehrzahl von EtherCAT-Datagrammen umfasst, wobei jedes EtherCAT-Datagramm einen Header, Daten und einen Arbeitszähler WKC umfasst, wobei der Arbeitszähler einen anomalen Austausch von Daten mit Ziel-Slave-Einheiten (3) anzeigt;
wobei die Konfigurationsdaten Gruppen von Ziel-Slave-Einheiten (3) definieren, die jedem EtherCAT-Datagramm zugeordnet sind.

## Revendications

1. Dispositif d'aide à la conception (4) qui établit une communication entre une unité maîtresse (1) et des unités esclaves (3) par l'intermédiaire d'un réseau (2), le dispositif d'aide à la conception (4) comprenant :
une partie d'acquisition d'informations de dispositif (11) configurée pour acquérir des informations de dispositif concernant chaque unité esclave (3) connectée à l'unité maîtresse (1) ;
une mémoire (42, 44) dans laquelle est mémorisé un fichier de définition (16), listant des informations concernant un groupe auquel appartient une unité esclave (3) à partir des informations de dispositif ou d'informations de configuration de réseau ;
**caractérisé par** :
un déterminateur de groupe (13) configuré pour grouper chaque unité esclave (3) sur la base des informations contenues dans le fichier de définition (16) et des informations de dispositif concernant chaque unité esclave (3) ; et
une partie de paramétrage (14) configurée pour générer des données de configuration sur la base d'un résultat de groupement obtenu par le déterminateur de groupe (13), les données de configuration étant des données définissant un format de trame Ethernet de trames Ethernet transmises successivement de l'unité maîtresse (1) à l'unité esclave (3) ;
chaque trame Ethernet comprenant une pluralité de datagrammes EtherCAT, chaque datagramme EtherCAT comprenant un en-tête, des données et un compteur de travail WKC, le compteur de travail indiquant un échange anormal de données avec des unités esclaves cibles (3) ;
dans lequel les données de configuration définissent des groupes d'unités esclaves cibles (3) associées à chaque datagramme EtherCAT.
